# FASCICULE DE BREVET EUROPEEN

(11) **EP 3 290 451 B1**
(45) Date de publication et mention de la délivrance du brevet: **18.08.2021**
(21) Numéro de dépôt: 16186842.7
(22) Date de dépôt: 01.09.2016
(51) Int. Cl.: C08F 220/24, C09D 133/16, C10M 107/28, C10M 107/38

(54) **SUBSTRAT COMPRENANT UNE SURFACE RECOUVERTE D'UN AGENT ÉPILAME ET PROCÉDÉ D'ÉPILAMAGE D'UN TEL SUBSTRAT**
SUBSTRAT, DAS EINE MIT EPILAMISIERUNGSMITTEL BESCHICHTETE OBERFLÄCHE UMFASST, UND EPILAMISIERUNGSVERFAHREN EINES SOLCHEN SUBSTRATS
SUBSTRATE COMPRISING A SURFACE COVERED WITH AN EPILAME AGENT AND METHOD FOR COATING SUCH A SUBSTRATE WITH EPILAME

(43) Date de publication de la demande: 07.03.2018
(73) Titulaire: The Swatch Group Research and Development Ltd., 2074 Marin (CH)
(72) Inventeur: Letondor, Christophe, 2525 Le Landeron (CH); Rannoux, Claire, 1110 Morges (CH)
(74) Mandataire: ICB SA

(56) Documents cités:
- EP-A1- 2 749 582
- EP-A1- 3 070 133
- WO-A1-2014/100580
- US-A1- 2012 032 093

## Description

### Domaine de l'invention

La présente invention se rapporte au domaine de la mécanique et notamment au domaine de l'horlogerie ou de la bijouterie. Elle concerne plus particulièrement un copolymère, ainsi qu'un substrat, notamment un substrat d'un élément d'une pièce d'horlogerie ou de bijouterie comprenant une surface recouverte au moins partiellement d'un agent épilame comprenant un tel copolymère. Elle concerne également un procédé d'épilamage d'un tel substrat, ainsi qu'une pièce d'horlogerie ou de bijouterie comprenant un élément comportant un tel substrat.

### Arrière-plan de l'invention

Il existe différents procédés pour modifier l'état de surface d'un substrat par un traitement au moyen d'un agent approprié de manière à améliorer spécifiquement certaines propriétés de surface. Par exemple, dans le domaine de la mécanique, et en particulier dans le domaine de l'horlogerie, mais aussi dans le domaine de la bijouterie, l'épilamage d'une surface d'une pièce ou d'un élément est souvent réalisé au moyen d'un agent épilame afin de contrôler et de réduire l'énergie de surface de ladite surface au cours de son utilisation. Plus particulièrement, un agent épilame a pour but d'empêcher l'étalement des huiles ou lubrifiants sur les éléments d'une pièce d'horlogerie ou de bijouterie en formant une surface hydrophobe et lipophobe permettant au lubrifiant de rester à un endroit prédéterminé de la surface traitée. EP2749582 A1 et EP3070133A1 décrivent des copolymères utilisés dans des revêtements de surfaces.

Le procédé d'épilamage standard est un process de dip coating. Il consiste à plonger les pièces d'horlogerie dans un bain d'épilamage, c'est-à-dire une solution de l'agent épilame dans un solvant à une concentration donnée. L'effet épilame dépend de la concentration en agent épilame. Industriellement, le même bain d'épilamage est utilisé pour épilamer des pièces d'horlogerie pendant plusieurs mois. Au fur et à mesure de son utilisation, la quantité d'agent épilame dans le bain diminue (une partie de l'agent épilame reste adsorbée/accrochée sur les pièces d'horlogerie) et la quantité de solvant de la solution d'agent épilame diminue également par évaporation. Ainsi, au cours de l'utilisation, la concentration en agent épilame dans le bain d'épilamage évolue. Pour limiter ces fluctuations, industriellement, une solution concentrée d'agent épilame et/ou du solvant est régulièrement ajoutée au bain d'épilamage. En revanche ces ajouts sont faits de manière très empirique étant donné que le procédé actuel d'épilamage ne permet pas d'avoir une information précise sur la concentration en agent épilame. Ceci conduit à des effets épilames qui varient significativement d'un lot à l'autre.

### Résumé de l'invention

L'invention, telle que définie par les revendications, a notamment pour objectif de pallier les différents inconvénients des agents épilames et des procédés d'épilamage connus.

Plus précisément, un objectif de l'invention est de fournir un procédé d'épilamage qui permettent de connaitre de manière précise la concentration en agent épilame au cours du temps, afin d'apporter de la robustesse au procédé global d'épilamage.

A cet effet, il est décrit un copolymère comprenant des unités V, des unités N, optionnellement au moins une unité M et optionnellement au moins une unité P, associées par liaisons covalentes par leurs chaines principales, où

| | | | |
|---|---|---|---|
| V est | 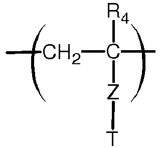 | N est | 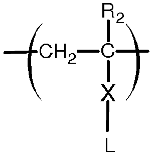 |
| M est | 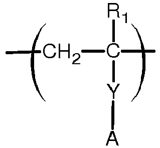 | P est | 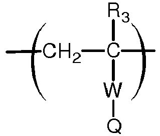 |

| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃ W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone T, identique ou différent, est un groupement traceur agencé pour déterminer la concentration en copolymère dans un milieu L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone. | | | |

La présente invention concerne un substrat comprenant une surface dont au moins une partie est recouverte d'un agent épilame, ledit agent épilame comprend au moins un composé sous la forme d'un copolymère comprenant des unités V, des unités N, optionnellement au moins une unité M et optionnellement au moins une unité P, associées par liaisons covalentes par leurs chaines principales, où

| | | | |
|---|---|---|---|
| V est | 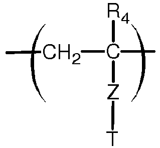 | N est | 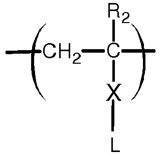 |
| M est | 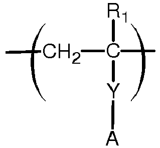 | P est | 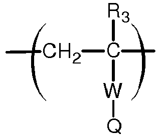 |

| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃ W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone T, identique ou différent, est un groupement traceur agencé pour déterminer la concentration en agent épilame dans un bain d'épilamage L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone. | | | |

Un tel agent épilame permet de contrôler et de suivre l'évolution de sa concentration au cours du temps dans le bain d'épilamage.

La présente invention concerne également un procédé d'épilamage d'au moins une partie d'une surface d'un substrat comprenant les étapes de :
a) préparation d'un bain d'épilamage contenant un agent épilame comprenant au moins un copolymère tel que défini ci-dessus
b) optionnellement, préparation de la surface du substrat
c) contrôle de la concentration en agent épilame dans le bain d'épilamage au moyen du groupement traceur
d) optionnellement réajustement de la concentration en agent épilame dans le bain d'épilamage
e) mise en contact de la surface du substrat avec l'agent épilame dans le bain d'épilamage
f) séchage.

La présente invention concerne également l'utilisation, comme agent épilame d'au moins une partie d'une surface d'un substrat, notamment destiné à l'horlogerie ou à la bijouterie, d'un copolymère comprenant des unités V, des unités N, optionnellement au moins une unité M et optionnellement au moins une unité P, associées par liaisons covalentes par leurs chaines principales, où

| | | | |
|---|---|---|---|
| V est | 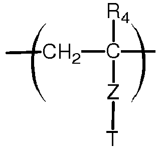 | N est | 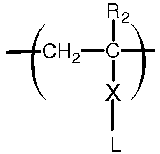 |
| M est | 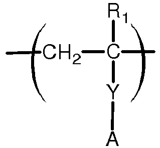 | P est | 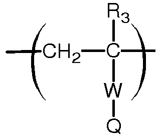 |

| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃ W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone T, identique ou différent, est un groupement traceur agencé pour déterminer la concentration en agent épilame dans un bain d'épilamage L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone, pour contrôler la concentration en agent épilame dans un bain d'épilamage. | | | |

La présente invention concerne également une pièce d'horlogerie ou de bijouterie comprenant un élément comportant un substrat tel que défini ci-dessus.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 représente des courbes d'absorbance en fonction de la longueur d'onde pour différentes concentrations en copolymère I dans un solvant;
- la figure 2 est la courbe de calibration pour le copolymère I représentant l'absorbance en fonction de la concentration à la longueur d'onde λ = 336 nm
- la figure 3 représente des courbes d'absorbance en fonction de la longueur d'onde pour différentes concentrations en copolymère II dans un solvant; et
- la figure 4 est la courbe de calibration pour le copolymère II représentant l'absorbance en fonction de la concentration à la longueur d'onde λ = 336 nm.

### Description détaillée de l'invention

Conformément à la présente invention, un substrat, notamment un substrat d'un élément d'une pièce d'horlogerie ou de bijouterie, comprend une surface dont au moins une partie est recouverte d'un agent épilame, ledit agent épilame comprenant au moins un composé sous la forme d'un copolymère comprenant des unités V, des unités N, optionnellement au moins une unité M et optionnellement au moins une unité P, associés par liaisons covalentes par leurs chaines principales, où

| | | | |
|---|---|---|---|
| V est | 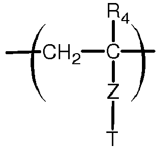 | N est | 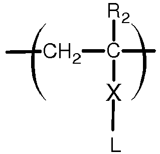 |
| M est | 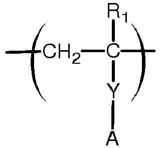 | P est | 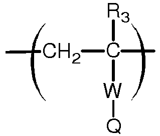 |

| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃ W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone T, identique ou différent, est un groupement traceur agencé pour déterminer la concentration en agent épilame dans un bain d'épilamage L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, tels que imidazole ou pyridine, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone. | | | |

L'invention mentionne également un copolymère destiné à former l'agent épilame, et comprenant des unités V, des unités N, optionnellement au moins une unité M et optionnellement au moins une unité P, associés par liaisons covalentes par leurs chaines principales, où

| | | | |
|---|---|---|---|
| V est | 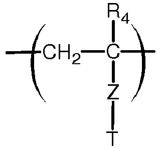 | N est | 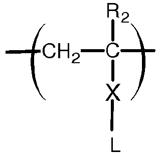 |
| M est | 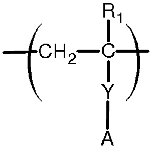 | P est | 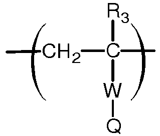 |

| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃, W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone T, identique ou différent, est un groupement traceur agencé pour déterminer la concentration en copolymère dans un milieu L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, tels que imidazole ou pyridine, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone. | | | |

De préférence, le copolymère ne comprend que des unités V, N et optionnellement M et/ou P.

Le copolymère mentionné peut être un copolymère statistique dans lequel les unités V, N, M et P sont reliées entre elles statistiquement par leur chaine principale, c'est-à-dire réparties de manière aléatoire, de sorte que le copolymère statistique peut s'écrire sous la forme :

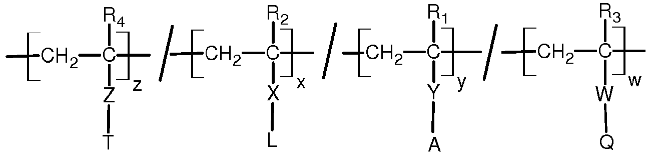

Le copolymère de l'invention peut être un copolymère bloc comprenant au moins un bloc d'unités V associées par liaisons covalentes par leurs chaines principales, au moins un bloc d'unités N associées par liaisons covalentes par leurs chaines principales, au moins l'un du bloc d'unités V et du bloc d'unités N comprenant optionnellement au moins une unité M et optionnellement au moins une unité P, associée par liaisons covalentes par leurs chaines principales, lesdits blocs étant connectés entre eux par liaisons covalentes par leurs chaines principales en séquences linéaires.

Le copolymère bloc peut s'écrire sous la forme :

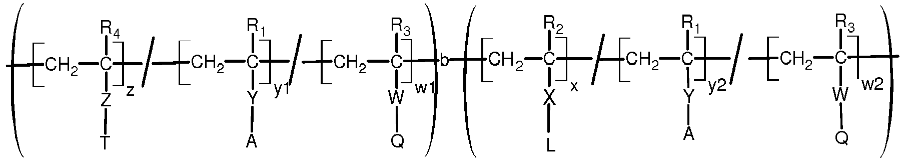

De préférence, le copolymère bloc comprend un seul bloc d'unités V et un seul bloc d'unités N, au moins l'un du bloc d'unités V et du bloc d'unités N comprenant optionnellement au moins une unité M et/ou une unité P. Quand elles sont présentes, le nombre y1 d'unités M et le nombre w1 d'unités P dans le bloc d'unités V peut varier du nombre y2 d'unités M et du nombre w2 d'unités P respectivement dans le bloc d'unités N.

De préférence, les unités P sont intégrées et réparties au sein du bloc composé des unités N, par exemple par copolymérisation statistique d'unités P avec les unités N pour former un seul bloc constitué majoritairement d'unités N et assimilé à un bloc d'unités N.

De préférence, les unités M sont intégrées et réparties au sein du bloc composé des unités N, par exemple par copolymérisation statistique d'unités M avec les unités N pour former un seul bloc constitué majoritairement d'unités N et assimilé à un bloc d'unités N.

D'une manière avantageuse, les groupements W, X, Y, Z, identiques ou différents, sont choisis parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

T, identique ou différent, est un groupement absorbeur UV ou un fluorophore. De tels groupements permettent par exemple de déterminer la concentration en copolymère par spectroscopie. Il est bien évident que tout autre type de traceur suivi par des moyens de détection et d'analyse appropriés peut être utilisé.

T, identique ou différent, est un groupement absorbeur UV dérivé d'un composé choisi parmi le groupe comprenant les benzotriazoles, les triazines, les phénones (notamment benzophénone, acétophénone, hydroxyalkylphénone, hydroxyarylphénone, amino alkylphénone, anthraquinone), les oxydes d'acyl-phosphine.

T, identique ou différent, est un groupement fluorophore dérivé d'un composé choisi parmi le groupe comprenant la fluorescéine, un naphtyle, l'anthracene, la coumarine, la rhodamine, un fluorobenzoate.

Les groupements fonctionnels d'intérêt A sont aptes à réagir avec la surface du substrat à épilamer, de manière à constituer des groupements d'ancrage de l'agent épilame à la surface du substrat. Avantageusement, des groupements A peuvent également être prévus en terminaison du copolymère.

D'une manière avantageuse, le copolymère comprend au moins deux groupes A différents.

Les groupements fonctionnels d'intérêt L sont responsables de l'effet épilame. Ils comprennent au moins un atome d'halogène, de préférence un atome de fluor. D'une manière préférée, L est un groupement carboné, soit une chaine alkyle, pouvant être cyclique, de préférence sans hétéroatome, en C₂-C₂₀, de préférence en C₄-C₁₀, et plus préférentiellement en C₆-C₉. L est partiellement ou totalement halogéné. D'une manière avantageuse, L est un groupement au moins partiellement fluoré, et de préférence totalement fluoré. L peut également comprendre un atome d'hydrogène sur le groupe terminal. L est de préférence une chaine alkyle perfluorée.

Les groupements fonctionnels d'intérêt Q des unités P sont utilisés pour modifier les propriétés de l'agent épilame et/ou apporter d'autres fonctions. Par exemple, Q peut être une chaine alkyle, de préférence en C₈-C₂₀, utilisée pour modifier l'angle de contact obtenu ou une chaine capable de constituer des points de réticulation lors d'une étape de réticulation complémentaire (étape g). Par exemple, les unités P peuvent être issues de stéaryl méthacrylate.

De préférence, le copolymère comprend, en pourcentage molaire, entre 1% et 20%, de préférence entre 3% et 10% d'unités V, entre 50% et 99%, de préférence entre 70% et 95% d'unités N, entre 0% et 50%, de préférence entre 1% et 20%, et plus préférentiellement entre 5% et 20% d'unités M, et entre 0% et 50%, de préférence entre 0% et 20%, et plus préférentiellement entre 0% et 10% d'unités P, les pourcentages étant exprimés par rapport au nombre total d'unités (w+x+y+z).

D'une manière avantageuse, le copolymère comprend entre 10 et 350 unités (w+x+y+z).

D'une manière particulièrement avantageuse, les unités M, N, P sont choisies pour porter plusieurs groupements A de nature différente, plusieurs groupements L, de préférence de même nature, et éventuellement un ou plusieurs groupements Q qui peuvent être identiques ou de nature différente, de manière à affiner et à améliorer les propriétés de l'agent épilame, afin d'obtenir plus spécifiquement un agent épilame universel et présentant une affinité améliorée avec le substrat.

De préférence, la surface du substrat dont au moins une partie est recouverte de l'agent épilame est réalisée dans un matériau choisi parmi le groupe comprenant les métaux, les oxydes métalliques, dopés ou non, les polymères, le saphir, le rubis, le silicium, les oxydes de silicium, les nitrures de silicium, les carbures de silicium, les DLC (Diamond Like Carbon), et leurs alliages.

Plus précisément, la surface du substrat peut être réalisée en acier, ou en métaux nobles tels que or, rhodium, palladium, platine, ou en oxydes métalliques, dopés ou non d'aluminium, zirconium, titane, chrome, manganèse, magnésium, fer, nickel, cuivre, zinc, molybdène, argent, tungstène, ou en polyoxyméthylène ou en acrylamide, ainsi que leurs alliages.

La présente invention concerne également un procédé d'épilamage d'au moins une partie d'une surface d'un substrat comprenant les étapes de :
a) préparation d'un bain d'épilamage contenant un agent épilame comprenant au moins un copolymère tel que défini ci- dessus
b) optionnellement, préparation de la surface du substrat, notamment par nettoyage selon les procédés horlogers standards,
c) contrôle de la concentration en agent épilame dans le bain d'épilamage au moyen du groupement traceur
d) optionnellement réajustement de la concentration en agent épilame dans le bain d'épilamage
e) mise en contact de la surface du substrat avec l'agent épilame dans le bain d'épilamage
f) séchage.

Il est bien évident que l'étape a) peut être mise en œuvre à distance dans le temps des autres étapes b), c), d) et f). D'une manière préférée, par exemple lorsque le procédé d'épilamage est réalisé en continu ou lorsqu'un même bain d'épilamage est utilisé plusieurs fois, les étapes c) et d) peuvent être répétées afin de contrôler la concentration en agent épilame au cours du temps de manière à maintenir cette concentration constante pour la mise en œuvre de l'étape e).

D'une manière avantageuse, lorsque le groupement T est un groupement absorbeur UV ou un fluorophore, la détermination de la concentration en agent épilame est réalisée par spectroscopie (mesure d'absorbance par exemple). Une étape intermédiaire, préalable à l'étape c) prévoit l'élaboration d'une courbe de calibration du copolymère. Pour cela, le copolymère est dissous à différentes concentrations dans un solvant (même solvant que celui utilisé pour la réalisation de la solution d'agent épilame) et pour chaque solution l'absorbance est mesurée par spectroscopie en fonction de la longueur d'onde.

La longueur d'onde pour laquelle l'absorbance est maximale est repérée puis on trace la courbe de calibration A = F(concentration) à la longueur d'onde pour laquelle l'absorbance est maximale. On en déduit le coefficient d'extinction molaire du polymère (loi de Beer Lambert A=εcl).

Pour contrôler la concentration en agent épilame dans le bain d'épilamage selon l'étape c), il suffit alors de mesurer l'absorbance de la solution du bain par spectroscopie, puis en utilisant la courbe de calibration préalablement établie d'en déduire la concentration en agent épilame dans le bain d'épilamage. L'opérateur peut ainsi rajouter du solvant ou de la solution concentrée d'agent épilame pour réajuster précisément la concentration, conformément à l'étape d). Dans le cadre d'un procédé d'épilamage en continu par exemple ou lorsqu'un même bain d'épilamage est utilisé plusieurs fois, plusieurs contrôles de la concentration en agent épilame permettent de suivre l'évolution de la concentration en agent épilame au cours du temps de manière à la maintenir constante.

De préférence, la préparation de l'agent épilame est réalisée par copolymérisation statistique ou en bloc de monomères aptes à former les unités V avec des monomères aptes à former les unités N, optionnellement avec des monomères aptes à former au moins une unité M et optionnellement avec des monomères aptes à former au moins une unité P.

Les techniques de copolymérisation statistique ou en bloc sont bien connues de l'homme du métier et ne nécessitent pas de description détaillée. Un mode de polymérisation particulièrement approprié pour la copolymérisation statistique est la copolymérisation radicalaire libre, en solution ou en émulsion.

Selon une première variante, le copolymère statistique peut être obtenu en une seule étape par copolymérisation, de préférence radicalaire, de monomères portant les chaines latérales Z-T avec des monomères portant les chaines latérales X-L et éventuellement des monomères portant les chaines latérales Y-A et/ou éventuellement des monomères portant les chaines latérales W-Q.

Selon une autre variante, le copolymère statistique peut être obtenu par copolymérisation, de préférence radicalaire, de monomères portant les chaines latérales Z adéquates avec des monomères portant les chaines latérales X adéquates et éventuellement des monomères portant des chaines latérales destinées à porter A et/ou éventuellement des monomères portant des chaines latérales destinées à porter Q, puis les chaines latérales sont modifiées après la polymérisation (post-fonctionnalisation), par exemple par « click chemistry », pour y introduire les groupements fonctionnels d'intérêt T, L, et les groupes A et/ou Q.

Un mode de polymérisation particulièrement approprié pour la copolymérisation en bloc est la copolymérisation contrôlée successive :
- de monomères aptes à former au moins un bloc d'unités V et optionnellement avec des monomères aptes à former au moins une unité M et/ou des monomères aptes à former au moins une unité P
- de monomères aptes à former au moins un bloc d'unités N, et optionnellement avec des monomères aptes à former au moins une unité M et/ou des monomères aptes à former au moins une unité P, M ou P identique ou différente.

Deux modes de polymérisation pour la copolymérisation en bloc particulièrement appropriés sont la copolymérisation radicalaire par transfert d'atomes (ATRP) et la polymérisation radicalaire contrôlée par transfert de chaîne réversible par addition-fragmentation (RAFT), en solution ou en émulsion.

Selon une première variante, le copolymère bloc peut être obtenu par polymérisation, de préférence radicalaire contrôlée, de monomères portant les chaines latérales Z-T avec éventuellement des monomères portant les chaines latérales Y-A et/ou éventuellement des monomères portant les chaines latérales W-Q, suivie de la copolymérisation, de préférence radicalaire contrôlée, de monomères portant les chaines latérales X-L avec éventuellement des monomères portant les chaines latérales Y-A et/ou éventuellement des monomères portant les chaines latérales W-Q, Y-A et W-Q identiques ou différents.

Selon une autre variante, le copolymère bloc peut être obtenu par polymérisation, de préférence radicalaire contrôlée, de monomères portant les chaines latérales Z adéquates avec éventuellement des monomères portant des chaines latérales destinées à porter A et/ou éventuellement des monomères portant des chaines latérales destinées à porter Q, suivie de la copolymérisation, de préférence radicalaire contrôlée, de monomères portant les chaines latérales X adéquates avec éventuellement des monomères portant des chaines latérales destinées à porter A et/ou éventuellement des monomères portant des chaines latérales destinées à porter Q, puis les chaines latérales sont modifiées, par exemple par « click chemistry », pour y introduire les groupements fonctionnels d'intérêt T, L et les groupes A et/ou Q.

De préférence, les monomères sont choisis parmi le groupe comprenant les monomères acrylates, méthacrylates, acrylamides, méthacrylamides, vinyliques, diéniques, styréniques et oléfiniques. Les monomères acrylates, méthacrylates, acrylamides, méthacrylamides, vinyliques et styréniques sont particulièrement préférés. Ces produits sont connus et pour la plupart disponibles sur le marché ou accessibles en une étape de synthèse.

Les monomères particulièrement préférés pour former les unités V comprenant un groupement traceur T sont choisis parmi le groupe comprenant le 2-H-benzotriazole-2-yl-hydroxyphenyl ethyl methacrylate, le 2-(2H-Benzotriazol-2-yl)-4-methyl-6-(2-propenyl)phenol, le 2-(4-Benzoyl-3-hydroxyphenoxy)ethyl acrylate, la 4-Allyloxy-2-hydroxybenzophenone, le 2-Naphthyl (meth)acrylate, le Fluorescein O-(meth)acrylate, le 9-Anthracenylmethyl (meth)acrylate, l'Ethidium bromide-N,N'-bisacrylamide, le N-(1-Naphthyl)-N-phenylmethacrylamide, le 7-[4-(Trifluoromethyl)coumarin]methacrylamide. De tels monomères sont disponibles commercialement et sont polymérisables.

Encore plus préférentiellement, les monomères pour former les unités V comprenant un groupement traceur T sont choisis parmi le groupe comprenant le 2-H-benzotriazole-2-yl-hydroxyphenyl ethyl methacrylate, le 2-(2H-Benzotriazol-2-yl)-4-methyl-6-(2-propenyl)phenol, le 2-(4-Benzoyl-3-hydroxyphenoxy)ethyl acrylate, la 4-Allyloxy-2-hydroxybenzophenone. Ces monomères comportent des groupements traceurs pouvant être suivis par spectroscopie UV-visible, beaucoup plus facile à mettre en place dans un environnement industriel que la spectroscopie de fluorescence.

Les monomères particulièrement préférés pour former les unités N, M et P sont :

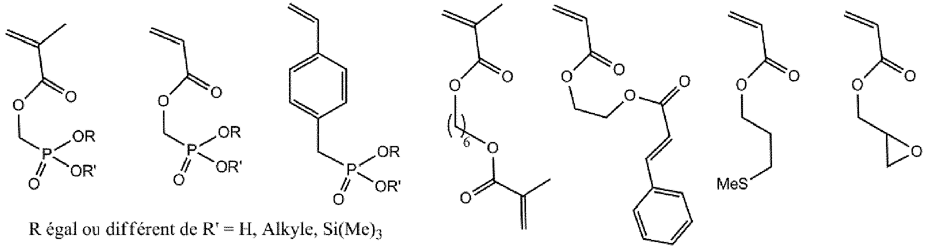

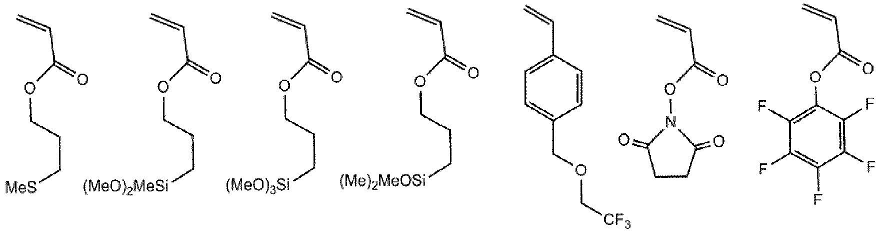

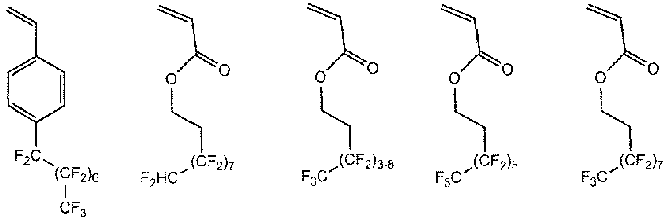

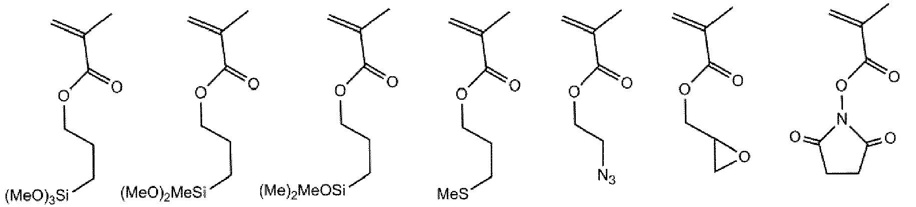

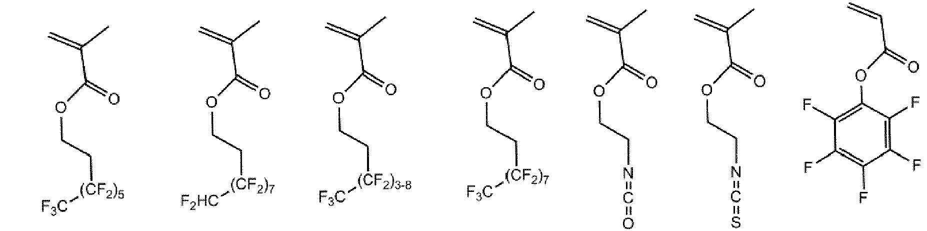

Ainsi, le copolymère utilisé comme agent épilame peut être facilement obtenu en une seule étape ou un nombre limité d'étapes à partir de produits commercialisés.

Un des copolymères utilisé de préférence dans la présente invention est un copolymère statistique qui présente la structure suivante (I)

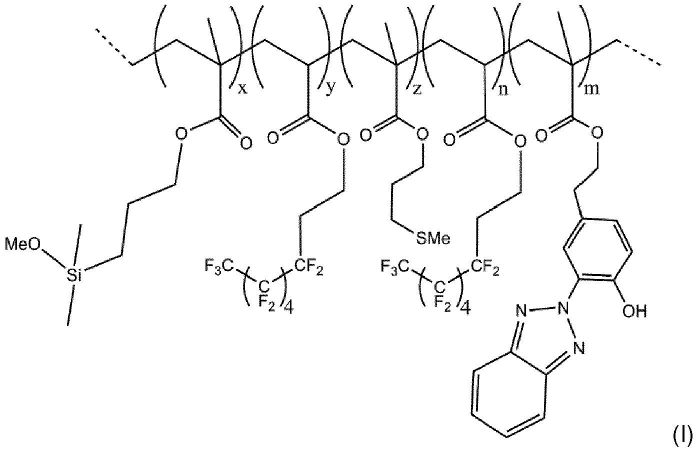

Un autre copolymère utilisé de préférence dans la présente invention est un copolymère statistique qui présente la structure suivante (II):

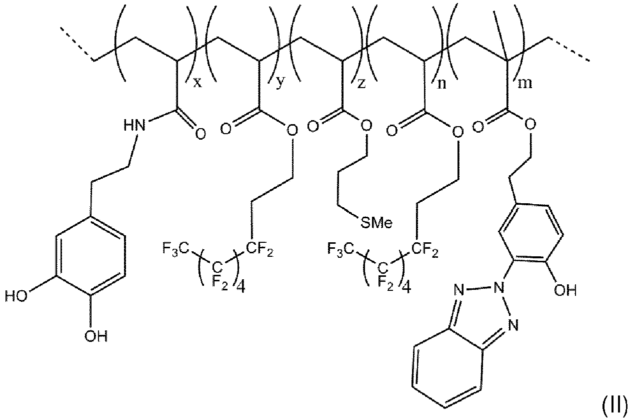

Les copolymères utilisés dans l'invention peuvent être obtenus sous la forme de poudre ou de liquide visqueux. Ils peuvent ensuite être mis en solution dans un solvant fluoré, tel que les hydrocarbures perfluorés ou fluorés, les perfluoropolyethers, les hydrofluorooléfines, les hydrofluoroethers, à des concentrations comprises de préférence entre 50 mg/L et 250 mg/L, afin d'obtenir une solution d'agent épilame, qui sera utilisée pour le traitement des surfaces à épilamer.

Selon les variantes, le procédé d'épilamage selon l'invention peut comprendre en outre, après l'étape e), une étape g) de réticulation complémentaire, rendue possible notamment par la présence des groupes fonctionnels d'intérêt appropriés prévus sur les chaines latérales Q des unités P.

Le substrat selon l'invention présente une surface recouverte d'un agent épilame simple et économique à synthétiser, présentant une affinité avec tout type de substrat et une résistance aux lavages améliorée par rapport aux agents épilames connus. Un élément ou une pièce présentant un substrat conforme à l'invention peut être utilisé dans tout type d'applications dans le domaine mécanique, et plus particulièrement dans la mécanique de précision, et notamment l'horlogerie et la bijouterie.

Le procédé selon l'invention permet de contrôler et de suivre la concentration en agent épilame dans le bain d'épilamage au cours du temps afin de pouvoir réajuster de manière adéquate la composition du bain d'épilamage en agent épilame. Ainsi, la concentration en agent épilame dans le bain d'épilamage est sensiblement constante de sorte que les effets épilame sont constants pour l'ensemble des lots traités. On obtient ainsi un procédé d'épilamage robuste.

Les exemples suivants illustrent la présente invention sans toutefois en limiter la portée.

### Synthèse du 3-methacryloxopropyl methyl thioether : (selon un mode opératoire similaire à celui décrit dans le brevet US 6'552'103)

Dans un tricol sous agitation magnétique placé sous azote sont ajoutés le thiomethylpropanol (4.05mL), le dichloromethane (100mL) et la triethylamine (8.2mL). La solution est refroidie dans un bain de glace puis du chlorure de methacrylate (3.8mL) est ajouté goutte à goutte sur 10 min. Le mélange réactionnel est agité pendant 2h à 0°C puis à température ambiante durant la nuit. 70 mL d'eau sont rajoutés puis le mélange réactionnel est transféré dans une ampoule à décanter. La phase organique et la phase aqueuse sont séparées. La phase organique est lavée avec une solution de HCI (pH=4) jusqu'à atteindre pH=7 puis séchée sur Na₂SO₄. Le solvant est ensuite éliminé à l'évaporateur rotatif pour conduire au produit attendu avec un rendement de 97%.
RMN¹H (CDCl₃, 500MHz): déplacement chimique (ppm) : 6.10 (s, 1H), 5.56 (s, 1H), 4.24 (t, 2H), 2.58 (t, 2H), 2.11 (s, 3H), 1.99 (m, 2H), 1.94 (s, 3H)

### Exemple 1

On synthétise un agent épilame sous la forme d'un copolymère statistique par polymérisation radicalaire libre de :
- (3-methacryloxopropyl)dimethyl-methoxysilane
- 1H,1H,2H,2H-Perfluorooctylacrylate
- 3-methacryloxopropyl methyl thioether préparé tel qu'indiqué ci-dessus
- 2-[3-(2H-Benzotriazol-2-yl)-4-hydroxyphenyl]ethyl methacrylate selon le mode opératoire suivant:
   dans un tube de Schlenk contenant la cyclohexanone (2mL) préalablement dégazée à l'azote, sont ajoutés le 2-[3-(2H-Benzotriazol-2-yl)-4-hydroxyphenyl]ethyl méthacrylate (148 mg), le (3-methacryloxopropyl)dimethyl-methoxysilane (166µL), le 3-Methacryloxopropyl methylthioether (111µL) puis le 1H,1 H,2H,2H-Perfluorooctylacrylate (2.0 mL). Le milieu réactionnel est barboté 5 min à l'azote puis 0.8mL d'hydrofluoroether (Novec™ HFE-7200 3M™) préalablement barboté à l'azote sont ajoutés. 0.5mL d'une solution d'azobisisobutyronitrile (AIBN) à 0.228mol/L est ajouté. Le milieu réactionnel est agité et chauffé à 80°C pendant 3h. Le polymère est coagulé dans le méthanol puis rincé avec 3*30mL de méthanol. Le polymère est obtenu sous forme d'un gel légèrement blanchâtre (rendement =95%).

On obtient le copolymère statistique (I) suivant :

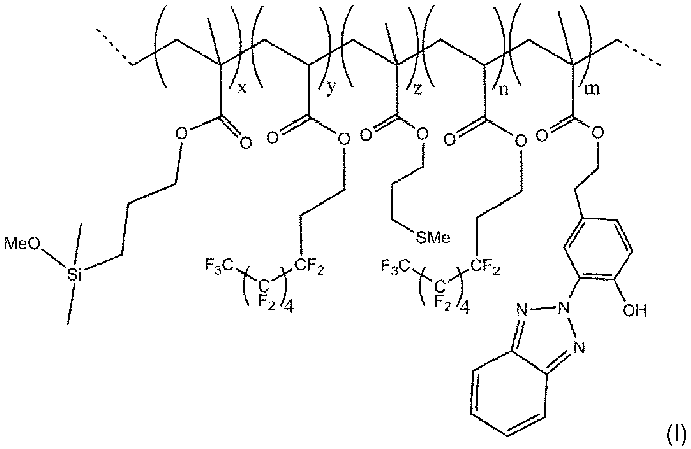

### Mesure d'absorbance UV :

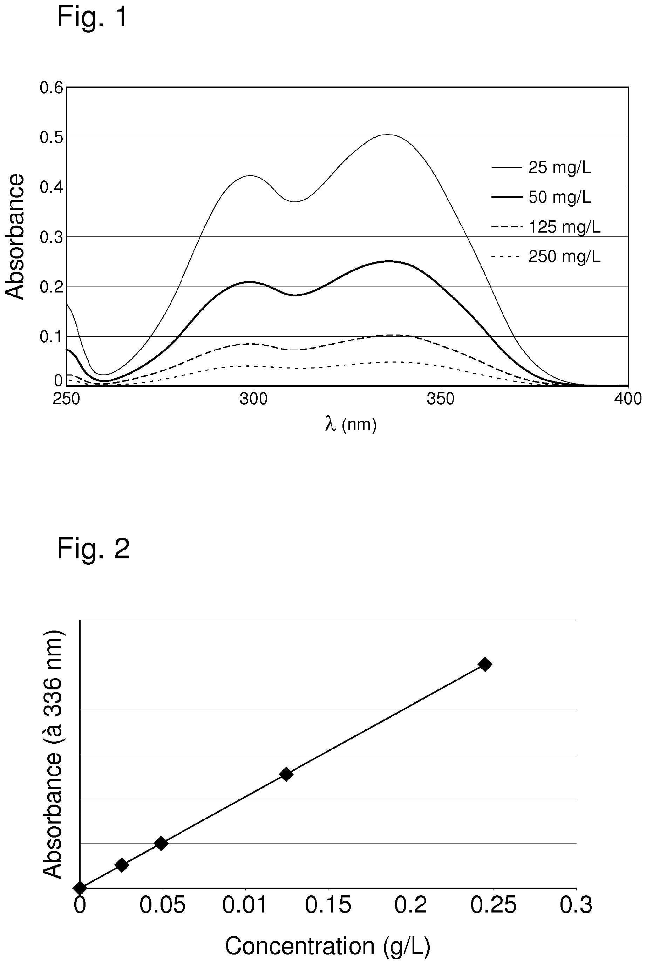

Le copolymère (I) est dissous à diverses concentrations dans un solvant fluoré, type Ecosolv (Moebius) identique au solvant utilisé dans le bain d'épilamage. Pour chaque concentration, on mesure par spectroscopie UV-visible l'absorbance. On obtient les courbes représentées sur la figure 1. La longueur d'onde pour laquelle l'absorbance est maximale est repérée à 336 nm, ce qui permet de déterminer le coefficient d'absorption molaire du polymère au maximum d'absorption à 336nm. On peut alors établir une courbe de calibration, telle que montrée sur la figure 2, en représentant l'absorbance en fonction de la concentration en copolymère. Cette courbe de calibration permet par la suite de déterminer la concentration en copolymère dans le bain d'épilamage en tout temps par une simple mesure d'absorbance par spectroscopie UV-visible réalisée à partir d'échantillons de bain d'épilamage prélevés. En fonction du résultat obtenu, l'opérateur sait s'il doit ajouter du solvant ou de la solution concentrée en agent épilame afin de réajuster précisément la concentration en agent épilame pour maintenir une concentration sensiblement constante au cours du procédé d'épilamage.

### Exemple 2

On synthétise un agent épilame sous la forme d'un copolymère statistique par polymérisation radicalaire libre de :
- 2-(2,2-Diphenyl-benzo[1,3]dioxo-5-yl)-ethyl-acrylate (obtenu par réaction entre le -(2,2-Diphenyl-benzo[1,3]dioxo-5-yl)-ethylamine (commercialement disponible) et l'acryloyl chloride)
- 1H, 1H,2H,2H-Perfluorooctylacrylate
- 3-acryloxopropyl methyl thioether (obtenu selon le mode opératoire décrit dans la littérature : Préparation of biomimetic polymer hydrogel materials for contact lenses Bertozzi, Carolyn et al. US 6552103)
- 2-[3-(2H-Benzotriazol-2-yl)-4-hydroxyphenyl]ethyl methacrylate selon le mode opératoire suivant:
   dans un tube de Schlenk contenant la cyclohexanone (2mL) préalablement dégazée à l'azote, sont ajoutés le 2-[3-(2H-Benzotriazol-2-yl)-4-hydroxyphenyl]ethyl methacrylate (162 mg), le 2-(2,2-Diphenyl-benzo[1,3]dioxo-5-yl)-ethyl-acrylate (373 mg), le 3-acryloxopropyl methylthioether (111µL) puis le 1H,1H,2H,2H-Perfluorooctylacrylate (2.1 mL). Le milieu réactionnel est barboté 5 min à l'azote puis 0.8mL d'hydrofluoroether (Novec™ HFE-7200 3M™) préalablement barboté à l'azote sont ajoutés. 0.55mL d'une solution d'azobisisobutyronitrile (AIBN) à 0.228mol/L est ajouté. Le milieu réactionnel est agité et chauffé à 80°C pendant 3h. Le polymère est coagulé dans le méthanol puis rincé avec 3*30mL. Le polymère est obtenu sous forme d'un gel légèrement blanchâtre (rendement =92%).

On obtient le copolymère statistique suivant :

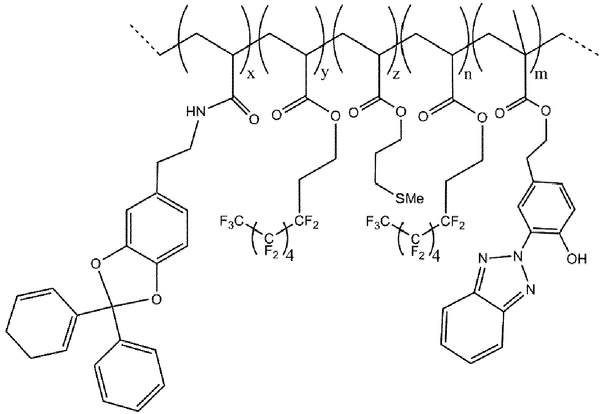

Le groupe protecteur de la fonction catéchol du polymère est ensuite retiré (déprotection de la fonction catéchol) suivant le mode opératoire suivant :
Le polymère obtenu précédemment est solubilisé dans 50 mL de solvant fluoré (Novec™ HFE-7200 3M™), puis 5 mL de Trifluoroacetic acid sont ajoutés sous agitation. La réaction est laissée sous agitation 1 heure. La mixture est ensuite lavée avec 4 x 40 mL d'eau, les phases organiques sont collectées puis le solvant fluoré réduit au minimum. Le polymère est coagulé dans le méthanol puis rincé avec 3*30mL. Le polymère est obtenu sous forme d'un gel légèrement blanchâtre (rendement =75%).

On obtient le copolymère statistique (II) suivant :

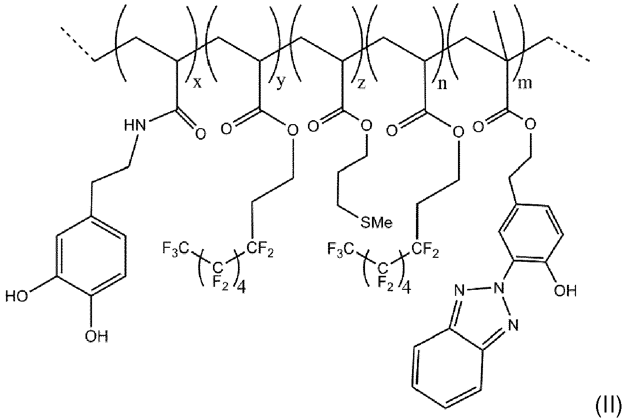

### Mesure d'absorbance UV :

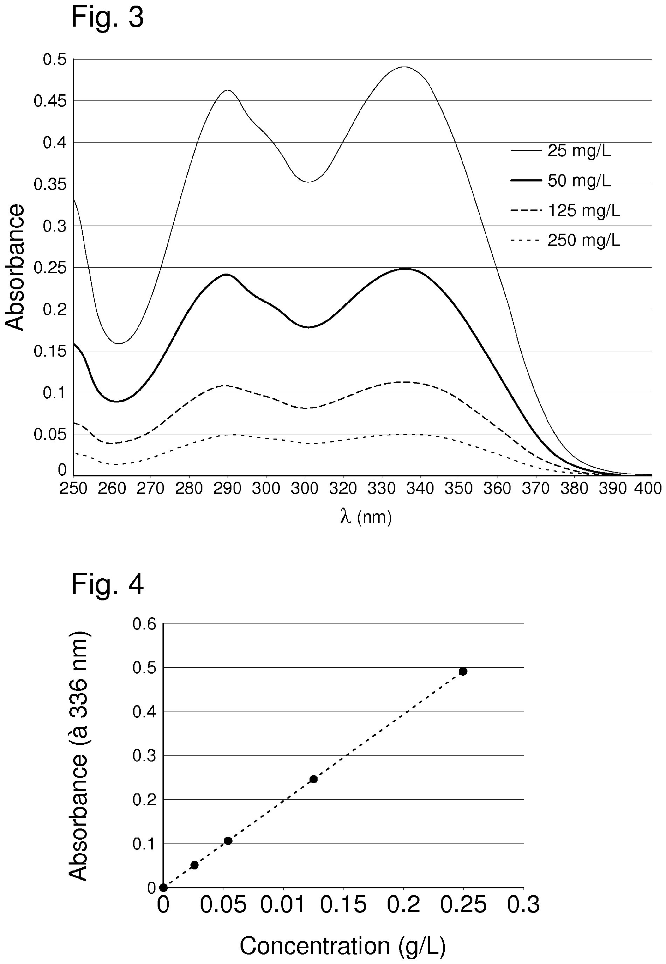

Le copolymère (II) est dissous à diverses concentrations dans un solvant fluoré, type Ecosolv (Moebius), identique au solvant utilisé dans le bain d'épilamage. Pour chaque concentration, on mesure par spectroscopie UV-visible l'absorbance. On obtient les courbes représentées sur la figure 3. La longueur d'onde pour laquelle l'absorbance est maximale est repérée à 336 nm, ce qui permet de déterminer le coefficient d'absorption molaire du polymère au maximum d'absorption à 336nm. On peut alors établir une courbe de calibration, telle que montrée sur la figure 4, en représentant l'absorbance en fonction de la concentration en copolymère. Cette courbe de calibration permet par la suite de déterminer la concentration en copolymère dans le bain d'épilamage en tout temps par une simple mesure d'absorbance par spectroscopie UV-visible réalisée à partir d'échantillons de bain d'épilamage prélevés. En fonction du résultat obtenu, l'opérateur sait s'il doit ajouter du solvant ou de la solution concentrée en agent épilame afin de réajuster précisément la concentration en agent épilame pour maintenir une concentration sensiblement constante au cours du procédé d'épilamage.

## Revendications

1. Substrat comprenant une surface dont au moins une partie est recouverte d'un agent épilame, ledit agent épilame comprenant au moins un composé sous la forme d'un copolymère comprenant des unités V, des unités N, optionnellement au moins une unité M et optionnellement au moins une unité P, associées par liaisons covalentes par leurs chaines principales, où
| | | | |
|---|---|---|---|
| V est | 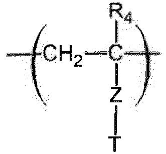 | N est | 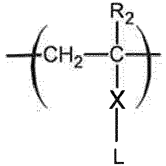 |
| M est | 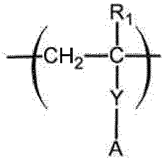 | P est | 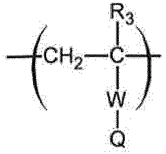 |
| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃ W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone **caractérisé en ce que** T, identique ou différent, est un groupement traceur agencé pour déterminer la concentration en agent épilame dans un bain d'épilamage, T étant un groupement absorbeur UV dérivé d'un composé choisi parmi le groupe constitué des benzotriazoles, des triazines, des phénones, et des oxydes d'acyl-phosphine ou un groupement fluorophore dérivé d'un composé choisi parmi le groupe constitué de la fluorescéine, d'un naphtyle, de l'anthracene, de la coumarine, de la rhodamine, et d'un fluorobenzoate. | | | |

2. Substrat selon la revendication 1, **caractérisé en ce que** W, X, Y, Z, identiques ou différents, sont choisis parmi le groupe comprenant des groupes esters en C₁-C₂₀, de préférence en C₂-C₁₀, des groupes amides, et des groupes dérivés du styrène.

3. Substrat selon l'une des revendications 1 à 2, **caractérisé en ce que** L est un groupement carboné en C₂-C₂₀, de préférence en C₄-C₁₀.

4. Substrat selon l'une des revendications 1 à 3, **caractérisé en ce que** L est un groupement au moins partiellement fluoré, de préférence totalement fluoré.

5. Substrat selon l'une des revendications 1 à 4, **caractérisé en ce que** le copolymère comprend, en pourcentage molaire, entre 1% et 20%, de préférence entre 3% et 10% d'unités V, entre 50% et 99%, de préférence entre 70% et 95% d'unités N, entre 0% et 50%, de préférence entre 1% et 20% d'unités M, et entre 0% et 50%, de préférence entre 0% et 20% d'unités P.

6. Substrat selon l'une des revendications 1 à 5, **caractérisé en ce que** le copolymère comprend entre 10 et 350 unités.

7. Substrat selon l'une des revendications 1 à 6, **caractérisé en ce que** sa surface dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les DLC (Diamond Like Carbon), et leurs alliages.

8. Procédé d'épilamage d'au moins une partie d'une surface d'un substrat comprenant les étapes de :
a) préparation d'un bain d'épilamage contenant un agent épilame comprenant au moins un copolymère tel que défini aux revendications 1 à 7
b) optionnellement, préparation de la surface du substrat
c) contrôle de la concentration en agent épilame dans le bain d'épilamage au moyen du groupement traceur
d) optionnellement réajustement de la concentration en agent épilame dans le bain d'épilamage
e) mise en contact de la surface du substrat avec l'agent épilame dans le bain d'épilamage
f) séchage.

9. Procédé d'épilamage selon la revendication 8, **caractérisé en ce que** ledit procédé d'épilamage est continu et **en ce que** les étapes c) et d) sont répétées au cours du temps.

10. Procédé d'épilamage selon l'une des revendications 8 et 9, **caractérisé en ce que** la préparation de l'agent épilame est réalisée par copolymérisation de monomères aptes à former les unités V avec des monomères aptes à former les unités N, optionnellement avec des monomères aptes à former au moins une unité M et optionnellement avec des monomères aptes à former au moins une unité P.

11. Procédé d'épilamage selon l'une des revendications 8 à 10, **caractérisé en ce qu'**il comprend en outre, après l'étape e), une étape g) de réticulation complémentaire.

12. Procédé d'épilamage selon l'une des revendications 8 à 11, caractérisé ce que les monomères sont choisis parmi le groupe comprenant les monomères acrylates, méthacrylates, acrylamides, méthacrylamides, vinyliques et styréniques.

13. Utilisation, comme agent épilame d'au moins une partie d'une surface d'un substrat, d'un copolymère comprenant des unités V, des unités N, optionnellement au moins une unité M et optionnellement au moins une unité P, associées par liaisons covalentes par leurs chaines principales, où
| | | | |
|---|---|---|---|
| V est | 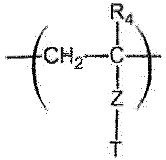 | N est | 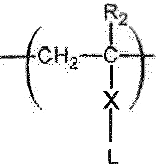 |
| M est | 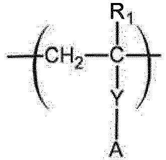 | P est | 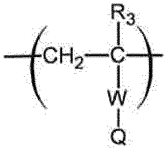 |
| | | | |
|---|---|---|---|
| où R₁, R₂, R₃, R₄, identiques ou différents, sont H, un groupe alkyle en C₁-C₁₀, alkényle en C₁-C₁₀, et de préférence H, CH₃ W, X, Y, Z, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone T, identique ou différent, est un groupement traceur agencé pour déterminer la concentration en agent épilame dans un bain d'épilamage, T étant un groupement absorbeur UV dérivé d'un composé choisi parmi le groupe constitué des benzotriazoles, des triazines, des phénones, et des oxydes d'acyl-phosphine ou un groupement fluorophore dérivé d'un composé choisi parmi le groupe constitué de la fluorescéine, d'un naphtyle, de l'anthracene, de la coumarine, de la rhodamine, et d'un fluorobenzoate L, identique ou différent, est un groupement carboné en C₁-C₂₀ halogéné, de préférence fluoré A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol Q, identique ou différent, est H, CH₃, une chaîne hydrocarbonée différente de T, pouvant contenir au moins un hétéroatome, linéaire ou ramifiée, saturée ou insaturée, comprenant au moins 2 atomes de carbone, pour contrôler la concentration en agent épilame dans un bain d'épilamage. | | | |

14. Pièce d'horlogerie ou de bijouterie comprenant un élément comportant un substrat selon l'une quelconque des revendications 1 à 7.

## Patentansprüche

1. Substrat, umfassend eine Oberfläche, von der mindestens ein Teil mit einem Epilamemittel beschichtet ist, wobei das Epilamemittel mindestens eine Verbindung in Form eines Copolymers umfasst, umfassend Einheiten V, Einheiten N, wahlweise mindestens eine Einheit M und wahlweise mindestens eine Einheit P, assoziiert durch kovalente Bindungen durch ihre Hauptketten, wobei
| | | | |
|---|---|---|---|
| V ist | 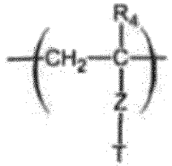 | N ist | 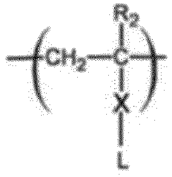 |
| M ist | 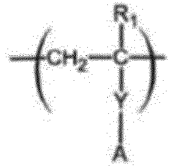 | P ist | 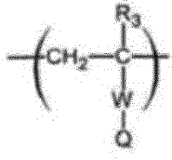 |
| | | | |
|---|---|---|---|
| wobei R₁, R₂, R₃, R₄, identisch oder verschieden, H, eine C₁-C₁₀-Alkyl-, C₁-C₁₀-Alkenylgruppe und vorzugsweise H, CH₃ sind W, X, Y, Z, identisch oder verschieden, Abstandshalterarme sind, die aus einem Heteroatom oder einer linearen oder verzweigten Kohlenwasserstoffkette bestehen, die mindestens ein Heteroatom enthalten können, umfassend mindestens ein Kohlenstoffatom L, identisch oder verschieden, eine halogenierte, vorzugsweise fluorierte, kohlenstoffhaltige C₁-C₂₀-Gruppierung ist A, identisch oder verschieden, eine Verankerungsgruppierung am Substrat darstellt, ausgewählt aus der Gruppe, umfassend Thiole, Thioether, Thioester, Sulfide, Thioamide, Silanole, Alkoxysilane, Silanhalogenide, Hydroxyle, Phosphate, Phosphonsäuren, geschützt oder nicht, Phosphonate, geschützt oder nicht, Amine, Ammonium, stickstoffhaltige Heterocyclen, Carbonsäuren, Anhydride, Brenzcatechin Q, identisch oder verschieden, H, CH₃, eine mindestens 2 Kohlenstoffatome umfassende, von T verschiedene, lineare oder verzweigte, gesättigte oder ungesättigte Kohlenwasserstoffkette, die mindestens ein Heteroatom enthalten kann, ist **dadurch gekennzeichnet, dass** T, identisch oder verschieden, eine zum Bestimmen der Konzentration an Epilamemittel in einem Epilamisierungsbad angeordnete Markierungsgruppierung ist, wobei T eine UV-Absorptionsgruppierung ist, abgeleitet von einer Verbindung, ausgewählt aus der Gruppe, bestehend aus Benzotriazolen, Triazinen, Phenonen, Acylphosphinoxiden oder einer Fluorophorgruppierung, abgeleitet von einer Verbindung, ausgewählt aus der Gruppe, bestehend aus Fluorescein, einem Naphthyl, Anthracen, Cumarin, Rhodamin und einem Fluorbenzoat. | | | |

2. Substrat nach Anspruch 1, **dadurch gekennzeichnet, dass** W, X, Y, Z, identisch oder verschieden, ausgewählt sind aus der Gruppe, umfassend C₁-C₂₀-, vorzugsweise C₂-C₁₀-Estergruppen, Amidgruppen und von Styrol abgeleitete Gruppen.

3. Substrat nach einem der Ansprüche 1 bis 2, **dadurch gekennzeichnet, dass** L eine kohlenstoffhaltige C₂-C₂₀-, vorzugsweise C₄-C₁₀-Gruppierung, ist

4. Substrat nach einem der Ansprüche 1 bis 3, **dadurch gekennzeichnet, dass** L eine mindestens teilweise fluorierte, vorzugsweise vollständig fluorierte Gruppierung ist.

5. Substrat nach einem der Ansprüche 1 bis 4, **dadurch gekennzeichnet, dass** das Copolymer, in Molprozent, zwischen 1 % und 20%, vorzugsweise zwischen 3% und 10% Einheiten V, zwischen 50% und 99 %, vorzugsweise zwischen 70 % und 95 % Einheiten N, zwischen 0 % und 50 %, vorzugsweise zwischen 1 % und 20 % Einheiten M und zwischen 0 % und 50 %, vorzugsweise zwischen 0 % und 20 % Einheiten P umfasst.

6. Substrat nach einem der Ansprüche 1 bis 5, **dadurch gekennzeichnet, dass** das Copolymer zwischen 10 und 350 Einheiten umfasst.

7. Substrat nach einem der Ansprüche 1 bis 6, **dadurch gekennzeichnet, dass** seine Oberfläche, von der mindestens ein Teil von dem Epilamemittel beschichtet ist, aus einem Material ausgeführt ist, ausgewählt aus der Gruppe, umfassend Metalle, Metalloxide, Polymere, Saphir, Rubin, Silicium, Siliciumoxide, Siliciumnitride, Siliciumcarbide, DLCs (diamantähnlicher Kohlenstoff) und deren Legierungen.

8. Verfahren zur Epilamisierung mindestens eines Teils einer Oberfläche eines Substrats, umfassend die Schritte:
a) Vorbereitung eines Epilamisierungsbads, das ein Epilamemittel, umfassend mindestens ein Copolymer wie nach Ansprüchen 1 bis 7 definiert, enthält
b) wahlweise Vorbereitung der Oberfläche des Substrats
c) Kontrolle der Konzentration an Epilamemittel in dem Epilamisierungsbad mittels einer Markierungsgruppierung
d) wahlweise Neuanpassung der Konzentration an Epilamemittel in dem Epilamisierungsbad
e) In-Kontakt-Bringen der Oberfläche des Substrat mit dem Epilamemittel in dem Epilamisierungsbad
f) Trocknung.

9. Verfahren zur Epilamisierung nach Anspruch 8, **dadurch gekennzeichnet, dass** das Verfahren zur Epilamisierung kontinuierlich ist und dadurch, dass die Schritte c) und d) im Laufe der Zeit wiederholt werden.

10. Verfahren zur Epilamisierung nach einem der Ansprüche 8 und 9, **dadurch gekennzeichnet, dass** die Vorbereitung des Epilamemittels durch Copolymerisierung von Monomeren ausgeführt wird, die geeignet sind, die Einheiten V zu bilden mit Monomeren, die geeignet sind, Einheiten N zu bilden, wahlweise mit Monomeren, die geeignet sind, mindestens eine Einheit M zu bilden und wahlweise mit Monomeren, die geeignet sind, mindestens eine Einheit P zu bilden.

11. Verfahren zur Epilamisierung nach einem der Ansprüche 8 bis 10, **dadurch gekennzeichnet, dass** es des Weiteren nach Schritt e) einen Schritt g) der komplementären Vernetzung umfasst.

12. Verfahren zur Epilamisierung nach einem der Ansprüche 8 bis 11, **dadurch gekennzeichnet, dass** die Monomere ausgewählt sind aus der Gruppe, umfassend Acrylat-, Methacrylat-, Acrylamid-, Methacrylamid-, Vinyl- und Styrolmonomere.

13. Verwendung, als Epilamemittel von mindestens einem Teil einer Oberfläche eines Substrats, eines Copolymers, umfassend Einheiten V, Einheiten N, wahlweise mindestens eine Einheit M und wahlweise mindestens eine Einheit P, assoziiert durch kovalente Bindungen durch ihre Hauptketten, wobei
| | | | |
|---|---|---|---|
| V ist | 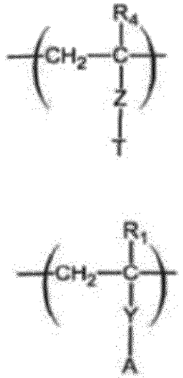 | N ist | 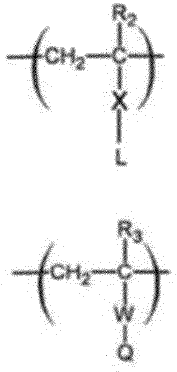 |
| M ist | | P ist | |
| | | | |
|---|---|---|---|
| wobei R₁, R₂, R₃, R₄, identisch oder verschieden, H, eine C₁-C₁₀-Alkyl-, C₁-C₁₀-Alkenylgruppe und vorzugsweise H, CH₃ sind W, X, Y, Z, identisch oder verschieden, Abstandshalterarme sind, die aus einem Heteroatom oder einer linearen oder verzweigten Kohlenwasserstoffkette bestehen, die mindestens ein Heteroatom enthalten kann, umfassend mindestens ein Kohlenstoffatom T, identisch oder verschieden, eine zum Bestimmen der Konzentration an Epilamemittel in einem Epilamisierungsbad angeordnete Markierungsgruppierung ist, wobei T eine UV-Absorptionsgruppierung ist, abgeleitet von einer Verbindung, ausgewählt aus der Gruppe, bestehend aus Benzotriazolen, Triazinen, Phenonen, Acylphosphinoxiden oder einer Fluorophorgruppierung, abgeleitet von einer Verbindung, ausgewählt aus der Gruppe, bestehend aus Fluorescein, einem Naphthyl, Anthracen, Cumarin, Rhodamin und einem Fluorbenzoat L, identisch oder verschieden, eine halogenierte, vorzugsweise fluorierte, kohlenstoffhaltige C₁-C₂₀-Gruppierung ist A, identisch oder verschieden, eine Verankerungsgruppierung am Substrat darstellt, und ausgewählt ist aus der Gruppe, umfassend Thiole, Thioether, Thioester, Sulfide, Thioamide, Silanole, Alkoxysilane, Silanhalogenide, Hydroxyle, Phosphate, Phosphonsäuren, geschützt oder nicht, Phosphonate, geschützt oder nicht, Amine, Ammonium, stickstoffhaltige Heterocyclen, Carbonsäuren, Anhydride, Brenzcatechin Q, identisch oder verschieden, H, CH₃, eine mindestens 2 Kohlenstoffatome umfassende, von T verschiedene, lineare oder verzweigte, gesättigte oder ungesättigte Kohlenwasserstoffkette, die mindestens ein Heteroatom enthalten kann, ist, zum Kontrollieren der Konzentration an Epilamemittel in einem Epilamisierungsbad. | | | |

14. Uhrmacherei- oder Schmuckstück, umfassend eine Element, umfassend ein Substrat nach einem der Ansprüche 1 bis 7.

## Claims

1. Substrate comprising a surface at least one part of which is coated with an epilame agent, said epilame agent comprising at least one compound in the form of a copolymer comprising V units, N units, optionally at least one M unit and optionally at least one P unit, linked by covalent bonds by their main chains, wherein
| | | | |
|---|---|---|---|
| V is | 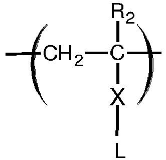 | N is | 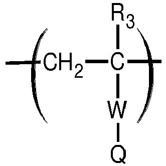 |
| M is | 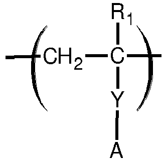 | P is | 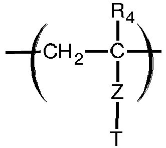 |
| | | | |
|---|---|---|---|
| where R₁, R₂, R₃, R₄, which may be identical or different, are H, a C₁-C₁₀ alkyl group, C₁-C₁₀ alkenyl group, and preferably H, CH₃ W, X, Y, Z, which may be identical or different, are spacer arms formed of a heteroatom or of a hydrocarbon chain that may contain at least one linear or branched heteroatom comprising at least one carbon atom L, which may be identical or different, is a halogenated, preferably fluorinated, C₁-C₂₀ carbon moiety A, which may be identical or different, forms an anchoring moiety for the substrate, and is chosen from the group comprising thiols, thioethers, thioesters, sulphides, thioamides, silanols, alkoxysilanes, silane halides, hydroxyls, phosphates, protected or non-protected phosphonic acids, protected or non-protected phosphonates, amines, ammoniums, nitrogenated heterocycles, carboxylic acids, anhydrides, catechol Q, which may be identical or different, is H, CH₃, a hydrocarbon chain different from T that may contain at least one linear or branched, saturated or unsaturated heteroatom, comprising at least 2 carbon atoms; **characterized in that** T, which may be identical or different, is a tracer group arranged to determine the concentration of epilame agent in an epilame-coating bath, T being a UV-absorbing group derived from a compound selected from the group comprising benzotriazoles, triazines, phenones, acylphosphine oxides or a fluorophore moiety derived from a compound chosen from the group comprising fluorescein, a naphtyl, anthracene, coumarin, rhodamine, a fluorobenzoate. | | | |

2. Substrate according to claim 1, **characterized in that** W, X, Y, Z, which may be identical or different, are selected from the group comprising C₁-C₂₀, preferably C₂-C₁₀, ester groups, amide groups, and styrene derivative groups.

3. Substrate according to any of claims 1 to 2, **characterized in that** L is a C₂-C₂₀, preferably C₄-C₁₀ carbon moiety.

4. Substrate according to any of claims 1 to 3, **characterized in that** L is an at least partially fluorinated, preferably completely fluorinated moiety.

5. Substrate according to any of claims 1 to 4, **characterized in that** the copolymer comprises, in molar percent, between 1% and 20%, preferably between 3% and 10% of V units, between 50% and 99%, preferably between 70% and 95% of N units, between 0% and 50%, preferably between 1% and 20% of M units, and between 0% and 50%, preferably between 0% and 20% of P units.

6. Substrate according to any of claims 1 to 5, **characterized in that** the copolymer comprises between 10 and 350 units.

7. Substrate according to any of claims 1 to 6, **characterized in that** the surface thereof, at least part of which is coated with the epilame agent, is made of a material chosen from the group comprising metals, metal oxides, polymers, sapphire, ruby, silicon, silicon oxides, silicon nitrides, silicon carbides, DLC (Diamond like carbon), and alloys thereof.

8. Epilame-coating method of at least one part of a substrate surface comprising the steps of:
a) preparing an epilame-coating bath containing an epilame agent comprising at least one copolymer as defined in claims 1 to 7
b) optionally, preparing the substrate surface
c) monitoring the concentration of epilame agent in the epilame-coating bath by means of the tracer group
d) optionally readjusting the concentration of epilame agent in the epilame-coating bath
e) placing the substrate surface in contact with the epilame agent in the epilame-coating bath
f) drying.

9. Epilame-coating method according to claim 8, **characterized in that** said epilame-coating method is continuous and **in that** steps c) and d) are repeated over time.

10. Epilame-coating method according to any of claims 8 and 9, **characterized in that** the preparation of the epilame agent is achieved by copolymerization of monomers capable of forming the V units with monomers capable of forming the N units. optionally with monomers capable of forming at least one M unit and optionally with monomers capable of forming at least one P unit.

11. Epilame-coating method according to any of claims 8 to 10, **characterized in that** after step e), the method also comprises a complementary cross-linking step g).

12. Epilame-coating method according to any of claims 8 to 11, **characterized in that** the monomers are selected from the group comprising acrylate, methacrylate, acrylamide, methacrylamide, vinyl and styrene monomers.

13. Use, as epilame agent for at least part of a surface of a substrate, of a copolymer comprising V units, N units, optionally at least one M unit and optionally at least one P unit, linked by covalent bonds by their main chains, wherein
| | | | |
|---|---|---|---|
| V is | 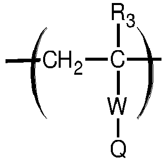 | N is | 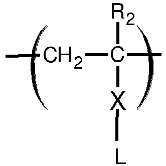 |
| M is | 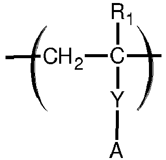 | P is | 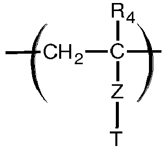 |
| | | | |
|---|---|---|---|
| where R₁, R₂, R₃, R₄, which may be identical or different, are H, a C₁-C₁₀ alkyl group, C₁-C₁₀ alkenyl group, and preferably H, CH₃ W, X, Y, Z, which may be identical or different, are spacer arms formed of a heteroatom or of a hydrocarbon chain that may contain at least one linear or branched heteroatom comprising at least one carbon atom T, which may be identical or different, is a tracer group arranged to determine the concentration of epilame agent in an epilame-coating bath, T being a UV-absorbing group derived from a compound selected from the group comprising benzotriazoles, triazines, phenones, acylphosphine oxides or a fluorophore moiety derived from a compound chosen from the group comprising fluorescein, a naphtyl, anthracene, coumarin, rhodamine, a fluorobenzoate L, which may be identical or different, is a halogenated, preferably fluorinated, C₁-C₂₀ carbon moiety A, which may be identical or different, forms an anchoring moiety for the substrate, and is chosen from the group comprising thiols, thioethers, thioesters, sulphides, thioamides, silanols, alkoxysilanes, silane halides, hydroxyls, phosphates, protected or non-protected phosphonic acids, protected or non-protected phosphonates, amines, ammoniums, nitrogenated heterocycles, carboxylic acids, anhydrides, catechol Q, which may be identical or different, is H, CH₃, a hydrocarbon chain different from T, which may contain at least one linear or branched, saturated or unsaturated heteroatom, comprising at least 2 carbon atoms, to monitor the concentration of epilame agent in an epilame-coating bath. | | | |

14. Timepiece or piece of jewellery comprising an element comprising a substrate according to any of claims 1 to 7.
